# EUROPEAN PATENT APPLICATION

(11) **EP 0 876 044 A2**
(43) Date of publication of application: **04.11.1998**
(21) Application number: 98107672.2
(22) Date of filing: 28.04.1998
(51) Int. Cl.: H04M 9/00, H04N 7/14

(54) **Electric connection system for intercom and/or video intercom installations**

(30) Priority: 30.04.1997 IT TO970374
(71) Applicant: Bitron Video S.r.l., 10044 Pianezza (TO) (IT)
(72) Inventor: Alice, Roberto, 10136 Torino (IT); Bersano, Marco, 10093 Collegno (TO) (IT); Cianficconi, Cesare, 10098 Rivoli (TO) (IT)
(74) Representative: Dini, Roberto, Dr. Ing.

(57) **Abstract**

An electric connection system for intercom and/or video intercom installations, comprising an external site (10), having a button strip (30) for calling the various internal sites or sets, a modular audio/video device (40), from which four wires (50) departs, being connected to the internal sets, and an electronic digitizer device (20), to be coupled with the audio/video module (40) by means of a dedicated connection (60), which provides for appropriate terminals for the connection of the call push buttons.

The four wires (50) leaving the modular audio/video device (40) are connected to a plurality of electronic display devices (90), being interconnected in parallel and installed with the internal sets.

## Description

The present invention refers to an electric connection system for intercom and/or video intercom installations.

An ever growing urging evolution in the field of intercom and/or video intercom systems highlights the more and more serious problem for all electronic equipment required for the users' functions (programmers, electronic stations, small processors) to be wired and integrated in most restricted spaces.

At present, electronic equipments are preferably arranged in one container alone located near the external sites of intercom systems, where the supporting elements for the intercommunication of the electronic devices and between the external site and the internal sites or sets are located along with the electronic circuits performing the specific required functions.

As an alternative, both the communication supporting elements and electronic circuits are located in containers, which are materially separated and connected by a plurality of individual electric wires.

However, this kind of systems is subject to quite a number of drawbacks.

First of all, it is desirable to reduce the number of electric wires connecting the electronic managing devices of an intercom system with the internal sets related to said system, so as to obtain a simplified wiring and reduce installation costs at a parity of internal sets for connection and system extension.

At present, in fact, connection of electronic modules with the internal sets is obtained by wiring a number of electric wires depending on the number of internal sets and their relevant distances.

It is the object of the present invention to realize an electric connection system for intercom and/or video intercom installations obviating to the above drawbacks, and ensuring the connection of a plurality of electronic devices through a simplified wiring compared to the known state of art.

Another object of the present invention is to indicate an electric connection system for intercom and/or video intercom installations using a lesser number of electric wires compared to conventional connections, at a parity of specific system functions. A further object of the present invention is to indicate an electric connection system comprising a plurality of wires having a minimal section compared to the techniques already known, independently from the distances existing between the internal sets of the intercom and/or video intercom installation.

Additionally, it is also an object of the present invention to provide an electric connection system for intercom and/or video intercom installations, for which no use of specially expensive components nor the adoption of complex and/or expensive technologies are required.

Said purposes are obtained by an electric connection system for intercom and/or video intercom installations according to claim 1, which is referred to for the sake of brevity.

A constant parallel wiring is advantageously preferred, where all devices are interconnected in parallel through a preset number of wires.

Specifically, the external site of an intercom and/or video intercom installation is provided with an electronic modular audio/video device wherefrom four wires depart towards the internal sets connected with the site, with a modular digitizer device coupled with the audio/video module through a simplified connection having proper terminals for connecting various call keys being present on the external site keyboard, and with a feed and safety device associated with an electrical network and connected with the above modular devices by means of two wires.

Said system also comprises a plurality of electronic image display devices (video intercom) interconnected in parallel on the wires exiting from the modular audio/video device and connected with their relevant feed and safety devices.

Further objects and advantages of the present invention will become apparent from the following description and annexed drawings, which are supplied by way of a non limiting example, wherein:
- Fig. 1 shows the diagram of a first embodiment of an electric connection system for intercom and/or video intercom installations according to the present invention;
- Fig. 2 shows the electric diagram of a modular digitizer device used in the electric connection system of Fig. 1;
- Fig. 3 shows the electric diagram of a feed device used in the electric connection system of Fig. 1;
- Fig. 4 shows the electric diagram of a modular audio/video device used in the electric connection system of Fig. 1;
- Fig. 5 shows the electric diagram of an image display device (video intercom) used in the electric connection system of Fig. 1;
- Fig. 6 shows a diagram of a second embodiment of an electric connection system for intercom and/or video intercom installations according to the present invention
- Fig. 7 shows the diagram of a third embodiment of an electric connection system for intercom and/or video intercom installations according to this invention;
- Fig. 8 shows a diagram of the electric connection between a modular digitizer device and a button strip installed in an external site of an intercom and/or video intercom installation according to the present invention.

With reference to the above figures, 10 generally indicates an external site of a video intercom installation according to the present invention, manufactured according to a modular structure, where 30 indicates two modules relating to two button strips for the call to the internal sets, 20 indicates an electronic digitizer module, 40 indicates an electronic audio/video module comprising a telecamera 42 and slots 43 for the assembly of a loudspeaker and a microphone, 71 indicates schematically an external supply network, 92 indicates a mains voltage transformer device, 85 indicates an electric door-opener lock, 83 indicates two wires connecting the lock block 85 with the audio/video module 40, 82 indicates the wires supplying the module 40, and 50 indicates the connecting lines transferring the signals from the module 40 to the internal sets.

Number 60 indicates a dedicated connector, which is connected with the digitizer module 20 through a wiring 60A, 90 indicates a display device (video intercom) installed near the internal set, 16 generally indicates a column formed by connecting lines of the display device 90 closed on two load impedances R.

The display devices 90 of internal sets are interconnected in parallel on the wires 50 exiting from the electronic audio/video module 40.

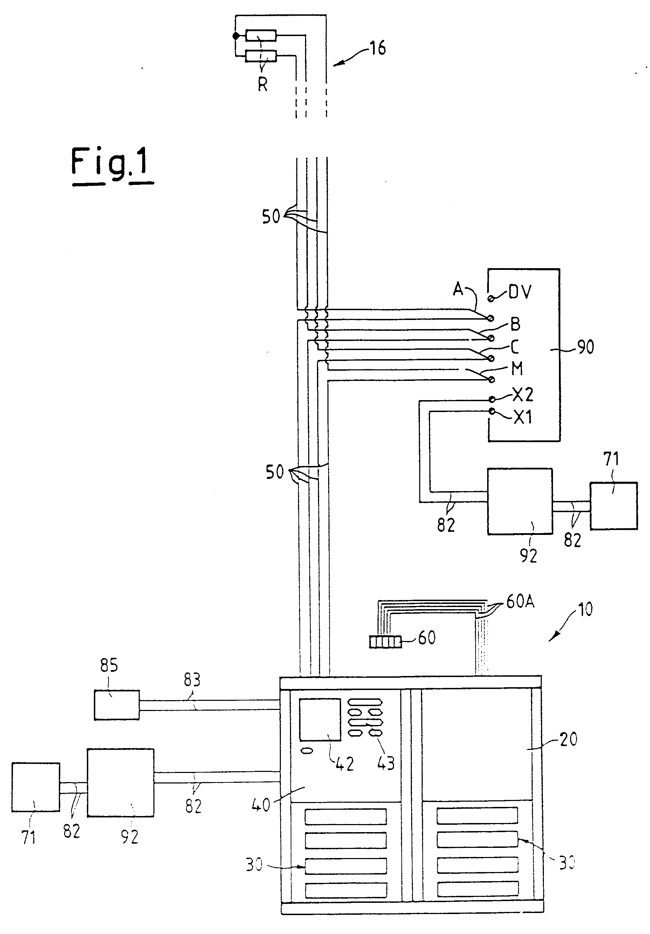

Figure 1 shows a basic electric wiring diagram for the devices of a video intercom installation according to the present invention. The wire indicated with M is the common earth of the electric connection system where all signals refer to, while the wires indicated with A and B carry a video signal in a balanced mode and basic band, so that the wire A carries an inverted polarity signal with respect to the one carried by the wire B.

The wire indicated with C is used to transmit three signals at different times, a digital code with voltage values ranging between 0V to -15V, "full duplex" phonic signals with voltage values ranging between 5V to 12V and a door-opener signal with voltage values ranging between 0V to 3V.

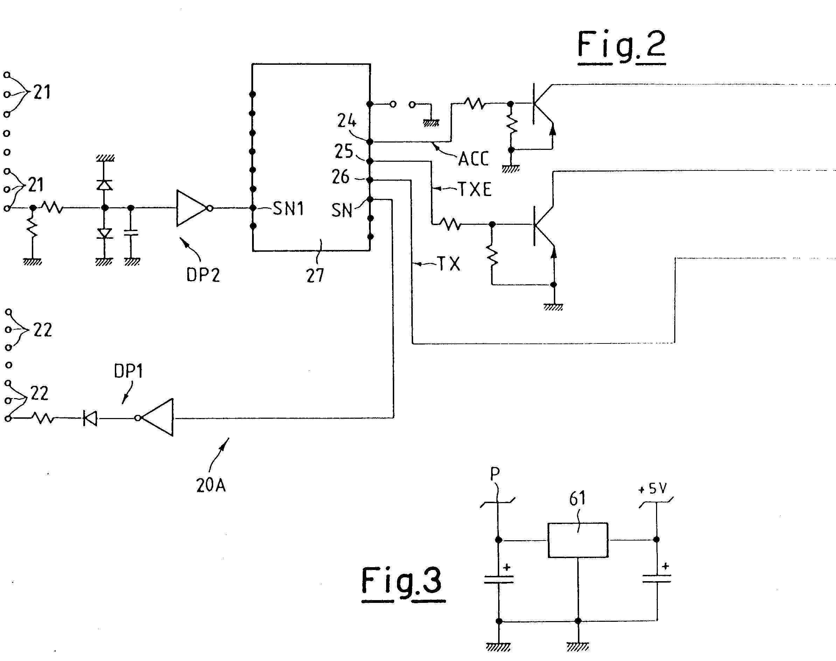

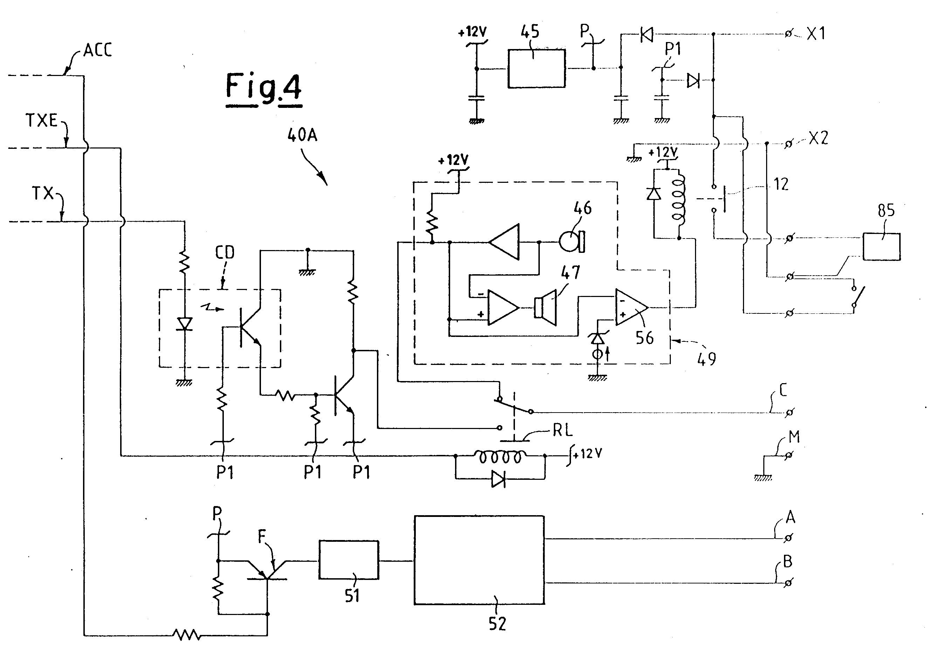

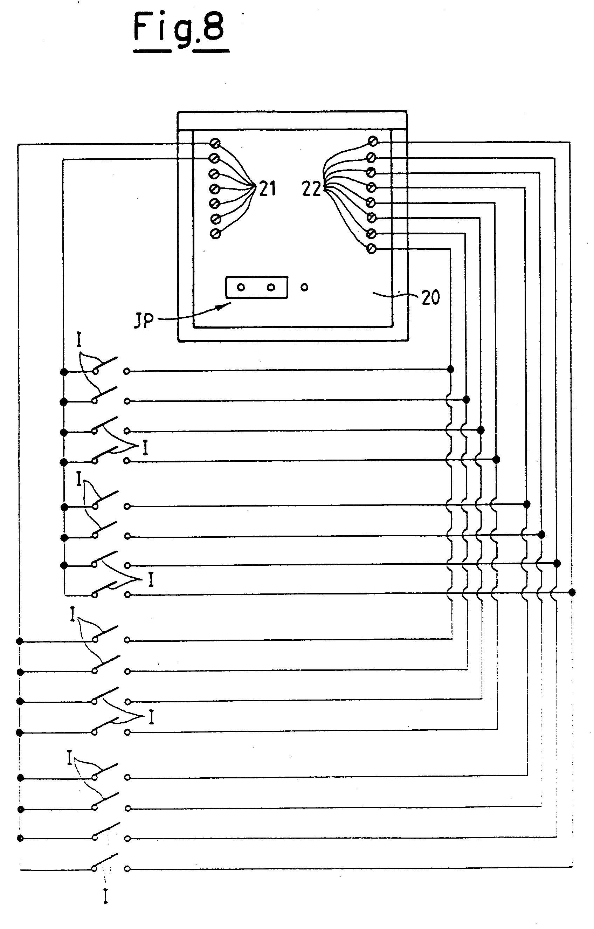

Referring to figures 2, 3, 4, 5 and 8, P indicates an end where a positive supply potential is measured with respect to the common earth M; P1 indicates an end where the same supply potential with inverted polarity with respect to the previous one is measured; 21 and 22 indicate two sets of contacts connected with the push-buttons available on the external site 10, where they can switch the terminals of an electronic circuit 20A inside the digitizer module 20 according to the number of available push-buttons and following the button pressed by the user on the button strip 30.

In this regard, JP indicates a switching device and I a set of mechanical switches, or electronic type, which connect the button strip 30 and the electronic digitizer device 20 according to a sequence introduced by the user's button choice.

Number 27 indicates a first microprocessor comprised in an electronic circuit 20A which manages the operating procedures of the modular digitizer device 20; 27A indicates a second microprocessor located in an electronic circuit 90A, managing operation of every display device (video intercom) 90 installed near each internal shunt of the video intercom installation; 40A generally indicates an electronic managing circuit for the operation of the modular audio/video device 40, whereas 61 45, 51, 62 and 15 indicate some integrated circuits for processing supply voltage signals transmitted to the digitizer device 20, to the modular audio/video device 40 and to the display device 90 of the electric connection system according to the present invention, respectively.

Substantially, the system operates as follows: when the user presses a button of the external site 10 to get in touch with a determined internal sets, the modular digitizer device 20 supervises the following operations through the microprocessor 27:
- recognition of the pressed button and assignment of a predetermined univocal digital code to it;
- control of the modular audio/video device 40 to suppress the audio signal from the wire C;
- insertion on the wire C through the audio/video device 40 of the signal related to the digital code previously assigned to the pressed button (at negative voltage values ranging 0V - 15V as already mentioned);
- supply activation of a telecamera 52 in the audio/video device 40 in order to convey a video signal on wires A and B;
- insertion of the audio signal again on the wire C upon termination of the code transmission;
- disconnection of supply to the telecamera 52 eighty seconds after the user's last call on the button strip 30.

Specifically, the microprocessor 27 sends pulses from the pin indicated with SN to the common wires of the various call button contacts 22 through a first plurality of logic gates (one of them is indicated with DP1 in Fig. 2); when a button is pressed, these pulses are returned to the microprocessor 27 by the pin indicated with SN1 through a second plurality of logic gates (one of them is indicated with DP2 in Fig. 2).

Thus, the microprocessor 27 is able to recognize the pressed button by measuring the delay time of the pulse with respect to an internal reference of it, and assign a digital univocal signal to it.

Thereafter, the microprocessor 27 puts output TXE corresponding to the pin indicated with 25 in the same logic state 1; as a result, the relay EL pertaining to the electronic circuit 40A of the audio/video device 40 is activated, disconnecting the wire C from the audio module 49 and connecting it with an electric circuit CD for digital codes transmission.

Then the microprocessor 27 directly puts said digital code in the form of time modulation pulses on the output TX corresponding to the pin indicated with 26; the electric circuit CD has the function of amplifying in current said pulses and issuing them at a negative voltage level with respect to the common earth M.

Once the digital code transmission phase is over, the relay RL is brought to its rest condition and the output ACC corresponding to the pin indicated with 24 is put in the logic state 1 by the microprocessor 27, to activate the supply to the telecamera 52 through a transistor F; upon expiration of the 80th second, the microprocessor 27 brings the outputs TX, TXE and ACC to their rest conditions (logic state 0), switching off the telecamera 52; in the case of a call subsequent to the first one, the above cycle will be repeated.

The audio module 49 is fitted with a comparator device 56 monitoring the voltage on the wire C during the user's conversation with an internal set going under a certain threshold; as a consequence of the depression of a door-opener button available on every display device 90, the comparator device 56 enables a relay of opening of the electric lock 85 indicated with 12.

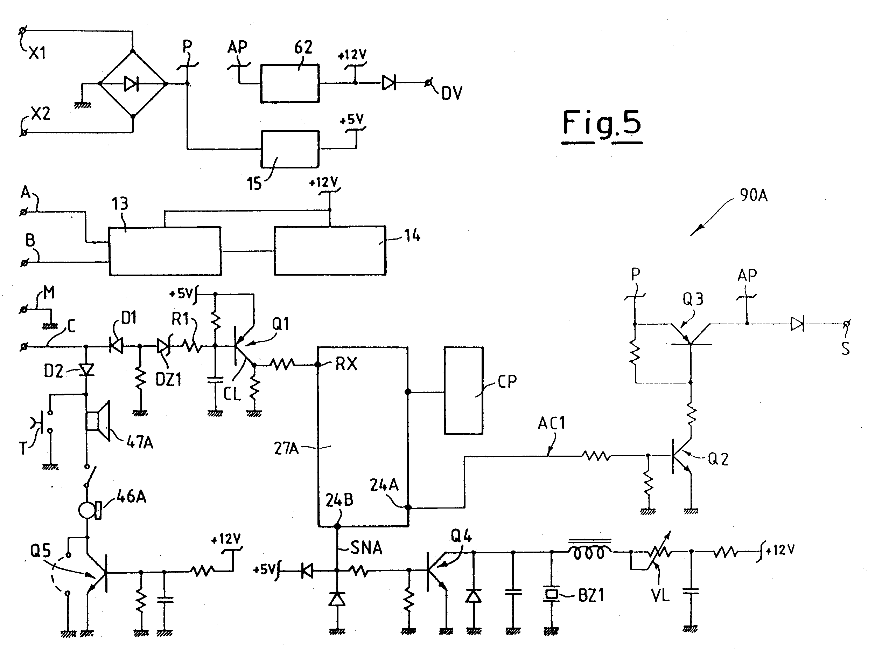

The display device 90 is permanently supplied through the wires X1 and X2 and its microprocessor 27A is always enabled and manages the digital codes received on an input pin indicated with RX in Fig. 5.

Along the wire C the digital code reaches the input of an electronic circuit 90A of the display device 90 (video intercom); the code has a negative voltage with respect to an earth terminal M and, through a diode D1, a Zener diode DZ1 and a resistance R1, drives a transistor Q1 reproducing the code pulses on the collector CL through a positive voltage signal apt to be managed by the microprocessor 27A, which compares it with a reference value set in a programming cell indicated with CP in Fig. 5. If the value received is identical to the set value, the microprocessor 27A starts a switch-on procedure of the screen 14 through a video amplification stage 13; otherwise, if the value of the digital code is different, the microprocessor 27A starts a switch-off procedure of the screen 14.

To switch on the screen 14, the microprocessor 27A puts the output AC1 corresponding to the pin indicated with 24A in its logic state 1; consequently, both transistors Q2 and Q3 become conductive and therefore also the voltage controller indicated with 62 is supplied by the supply source AP.

In this case, the controller 62 delivers a continuous 12 V voltage signal, capable of supplying the video amplifying stage 13 and the screen 14; in addition, it feeds terminals DV and S, which are used for likely fittings and external sound alarms or video distributors. The video amplifying stage 13 and the screen 14 are not shown as generally known stages are employed to this purpose.

The video signal is available on wires A and B and reproduced on the screen 14.

The microprocessor 27A also places on the output SNA corresponding to the pin indicated with 24B a square wave train whose frequency value can drive the transistor Q4, which will then drive a ceramic buzzer indicated with BZ1 in Fig. 5; this latter reproduces a three-tone melody, whose volume is controlled by the potentiometer VL; therefore the microprocessor 27A ends the call signal it generated about 3 seconds later.

When the screen 14 is on, due to its 12V supply, the transistor Q5 is conductive and let the user to speak with the internal set through two transducers (the microphone 46A and the loudspeaker 47A) available in the set's microtelephone.

In order to open the door, it is enough to press a key T, which connects the phonic wire C with the earth through the diode D2; the lock block 85 is enabled by proper electric circuits generally known as such and inserted in the audio/video device 40.

The microprocessor 27A puts the output AC1 in its logic state 0 after a time interval of about 60-70 seconds, then the screen 14 will turn off; should the digital code received differ from the one set in the programming cell CP, then the output AC1 would be placed in its logic state 0.

This feature allows a simultaneous switch-on of a plurality of video intercom installations 90A by simply programming the same code in the cell CP.

According to the above description the features of the electric connection system for intercom and/or video intercom installations being the subject of the present invention are apparent, and its advantages clearly understandable.

Specifically, they are represented by:
- a reduced number of electric wires for assembling an intercom installation with respect to the known state of art, at a parity of specific functions
- smaller electric wire sections with respect to known techniques, and independent from the distance between the internal sets of the installation;
- a considerable wiring extension (wire lengths up to 200-300 meters);
- simple assembly of the installation and lower costs with respect to other connection systems already known.

Finally, it is obvious that many changes are possible to the electric connection system for intercom and/or video intercom installations as provided by the present invention, without departing from the novelty principles of the innovating idea, and it is also clear that in the practical embodiment the materials, forms and sizes detailed in the figures may differ according to specific requirements and be replaced with other technically equivalent elements.

If, for instance, the telecamera 52 and the relevant electronic driving circuits, wires A and B, and transistor F are removed from the electronic modular audio/video device 40 and the output ACC of the microprocessor 27 is not used, we obtain a simple audio module, using two common wires for normal intercom operation; if both screen driving blocks 13 and 14 are removed from the display device 90, we obtain a standard intercom. Finally, a conventional intercom service with call, conversation (possibly secret and cryptable) plus street-door opening functions can be obtained simply using two wires to interconnect the various devices.

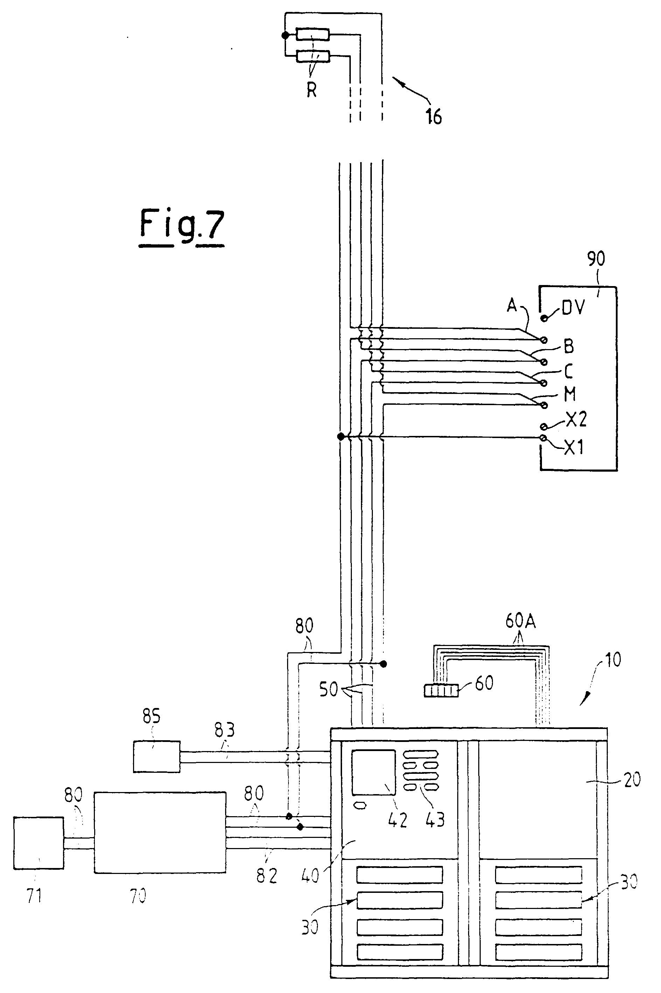

Due to economical reasons, it is possible to use one feeder only to supply current to all display devices of the internal sets and modular audio/video device (as represented in Fig. 7); in this case, the electric wires required for the connection system will be in number of five. The same embodiment can be provided for an exclusively intercom installation using three wires for wiring purposes.

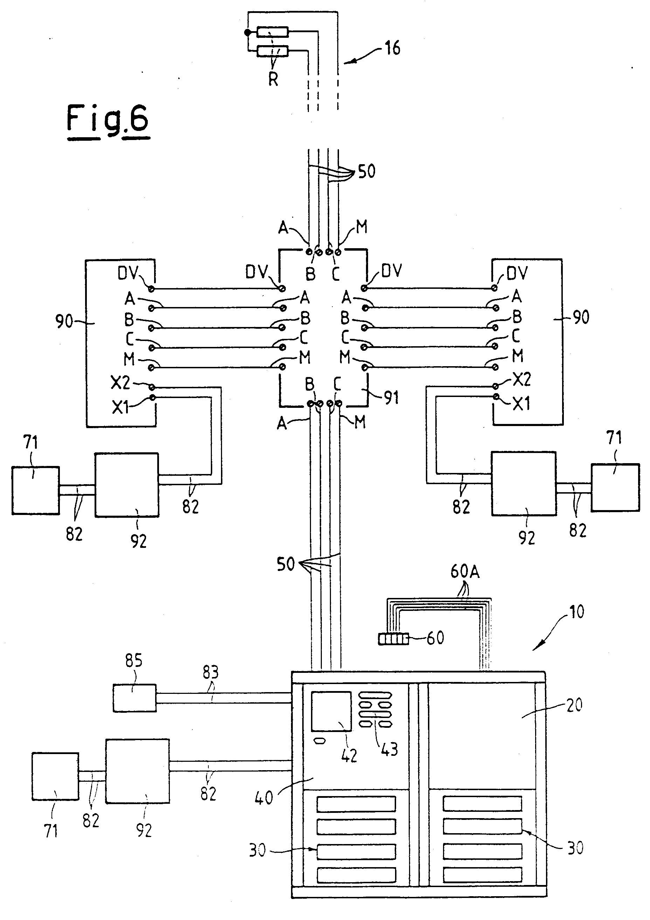

Finally, a symmetric wiring of the display devices (as represented in Fig. 6) may prove useful in some applications; in this instance, a simple fitting will be needed with respect to the basic solution of Fig. 1, e.g. an electronic signal distributing device (generally known as such) plus an additional wire to connect every display device of the internal set with the signal distributor.

## Claims

1. Electric connection system for intercom and/or video intercom installations, of the type comprising at least an external site (10) wherefrom a call can be made through at least a button strip (30) to a plurality of internal sets connected with said external site (10), at least a modular audio/video device (40) inserted in the external site (10) and connected with the internal sets through a plurality of first wires (50), at least a system supply source (71) and at least a transformer device (92) of the wave form relating to the system supply voltage, which are connected with said modular audio/video device (40) through at least two second wires (82), at least an electronic device (90) installed with each internal set, capable of communicating with said modular audio/video device (40), characterized in that said modular audio/video device (40) is connected at least with an electronic digitizer device (20), which is connected with said button strip (30), and has the functions of codifying the call to an internal set and manage said modular audio/video device (40), said electronic devices (90) of the internal sets being interconnected in parallel on said first wires (50) exiting from said audio/video device (40).

2. System according to claim 1, characterized in that said first wires (50) exiting from said modular audio/video device (40) are in number of four.

3. System according to claim 2, characterized in that said four wires (50) comprise a first system earth wire (M), where all signals refer to, two third wires (A, B) carrying a video signal in a balanced mode and basic band, so that one of them carries an inverted signal with respect to that carried by the other one, and a fourth wire (C) to carry a plurality of signals at different times.

4. System according to claim 3, characterized in that said plurality of signals comprises a digital code, whose voltages range between 0V and -15V (extreme values included), an audio signal, whose voltages range between 5V and 12 V (extreme values included), and a signal for the opening of the street door, whose voltages range between 0V and 3V (extreme values included).

5. System according to claim 3, characterized in that said electronic devices (90) of the internal sets comprise at least an image display means (14) and at least a video signal amplifying device (13).

6. System according to claim 1, characterized in that each one of said electronic devices (90) of the internal sets is connected with a supply source (71) and with a transformer device (92) of the wave form relating to the supply voltage.

7. System according to claim 1, characterized in that said electronic digitizer device (20) is connected with said button strip (30) through a plurality of switches (I) and is coupled with said modular audio/video device (40) through a wiring (60A) with dedicated connection (60), said digitizer device (20) being equipped with a plurality of proper terminals (21, 22) for the connection of the call buttons.

8. System according to claim 1, characterized in that it comprises at least a microprocessor (27, 27A), supervising the system operation in order to
- recognize the button pressed on the button strip (30) and assign a proper univocal digital code to it;
- control said modular audio/video device (40) for removing the audio signal from said fourth wire (C) and insert said digital code signal;
- activate the supply to at least a telecamera of the audio/video device (40) for obtaining a video signal on both said third wires (A, B);
- insert again the audio video on said fourth wire (C) after digital code transmission;
- disconnect the supply to the audio/video device (40) after a preset time interval since the last pressing of a button on the button strip (30);
- transmit a sound call signal to the internal sets, to permit communication between the external site (10) and at least an internal set through at least a transducer (46, 47, 46A, 47A);
- activate an electric lock (85) through proper electric and/or electronic circuits inside the modular audio/video device (40);
- activate at least an image display device (90) with at least one of the internal sets.
